# DEMANDE DE BREVET EUROPEEN

(11) **EP 0 545 793 A1**
(43) Date de publication de la demande: **09.06.1993**
(21) Numéro de dépôt: 92403212.1
(22) Date de dépôt: 27.11.1992
(51) Int. Cl.: H02K 23/66, B60S 1/08

(54) **Machine électrodynamique à collecteur, comme un moteur à courant continu, dotée d'un capteur d'autosynchronisation et système d'essuyage de vitre utilisant un tel moteur**

(30) Priorité: 06.12.1991 FR 9115162
(71) Demandeur: VALEO SYSTEMES D'ESSUYAGE, 78180 Montigny-Le-Bretonneux (FR)
(72) Inventeur: Materne, Xavier, F-92120 Montrouge (FR); Dazat, Richard, F-92320 Chatillon (FR)
(74) Mandataire: Gamonal, Didier

(57) **Abrégé**

Il s'agit (2) un moyen d'autosynchronisation (1,2), destiné à permettre de synchroniser le fonctionnement de la machine sur un phénomène extérieur.

Le moyen d'autosynchronisation (12) de l'invention comporte une roue (2) liée au collecteur (7) de la machine et d'un organe de lecture (1) lié au stator de la machine.

L'organe de lecture (1) détecte la position angulaire instantanée de la machine.

Application aux essuie-glaces de véhicule.

## Description

La présente invention concerne une machine électrodynamique à collecteur dotée d'un capteur d'autosynchronisation. Elle concerne plus particulièrement un moteur à courant continu à collecteur.

Elle concerne aussi un système d'essuyage de vitre de véhicule utilisant au moins un tel moteur.

Dans l'art antérieur, on connaît déjà des systèmes permettant de faire fonctionner au moins deux machines électrodynamiques de façon synchronisée. En particulier, quand la machine électrodynamique est un moteur, il s'agit de faire travailler en même temps ou avec des caractéristiques électromécaniques (position, vitesse, puissance ou couple moteur) au moins deux moteurs. Pour atteindre cet objectif, on a cherché à construire un moyen d'autosynchronisation associé à chaque moteur, moyen qui permet de rendre plus facile et plus efficace la synchronisation du fonctionnement d'un système mécanique à plusieurs moteur.

C'est le cas notamment de l'essuyage des vitres d'un véhicule, où notamment, deux balais sont entraînés en synchronisme quand un seul moteur est utilisé, il faut entraîner les axes de basculement des deux balais d'un essuyage à l'aide d'une timonerie encombrante, bruyante et coûteuse tant en prise qu'en énergie.

L'invention propose un moyen permettant de résoudre le problème précité en ce que le moyen d'autosynchronisation est constitué à partir d'un capteur de position angulaire du rotor.

Dans l'art antérieur, on a déjà proposé des moteurs électriques sans collecteur qui sont dotés de capteurs de position du rotor de façon notamment à fournir un signal de commande à un circuit de pilotage. Le circuit de pilotage produit en réponse des signaux de commande à destination d'éléments de commutation disposés sur le chemin d'alimentation des diverses phases ou bobinages statoriques. Pour de tels moteurs, par exemple les moteurs à commutation électronique, la question de l'autosynchronisation ne se pose pas dans les mêmes termes.

L'utilisation du moteur à collecteur est intéressante au niveau du coût et de la rusticité. Mais le fait qu'il ne comporte pas facilement de moyen permettant de connaitre la position angulaire de son rotor est un inconvénient pour résoudre le problème technique de l'autosynchronisation.

La machine électrodynamique de l'invention peut aussi être une génératrice ou encore être une machine réversible, moteur dans un premier mode de fonctionnement et génératrice dans un second mode de fonctionnement.

Selon un autre aspect de la présente invention, on apporte un perfectionnement à l'art antérieur en résolvant le problème du positionnement des parties actives du capteur, partie du moyen d'autosynchronisation.

Selon un autre aspect de l'invention, afin de réduire les coûts de fabrication, dans le cas d'une machine électrodynamique à collecteur, le moyen d'autosynchronisation est intégré avec le collecteur et le reste des équipements de service de la machine, dans le même boîtier. L'invention permet de réaliser une machine sous forme intégrale. Pour réaliser une haute intégration des fonctions de la machine, les fonctions d'alimentation électrique et de gestion du capteur d'autosynchronisation sont au maximum intégrées aux équipements de service de la machine.

En effet, la présente invention concerne une machine électrodynamique à collecteur tournant avec un rotor dans un stator, comme un moteur à courant continu, dotée d'un moyen d'autosynchronisation. L'invention se caractérise en ce que le moyen d'autosynchronisation comporte :
- une roue, liée au collecteur et dont au moins une partie porte une indication de position angulaire enregistrée ;
- au moins un organe de lecture de ladite indication de position, l'organe de lecture étant lié au stator de la machine.

L'invention concerne aussi un système d'essuyage synchronisé comportant deux zones de balayage synchronisé balayées par des balais, dont l'extrémité est entraînée par un moteur synchronisé par un circuit de pilotage, chacun des moteurs étant muni d'un connecteur, connecté à un circuit de pilotage par des câbles de liaison, le circuit de pilotage recevant de l'énergie électrique d'une batterie et recevant les commandes d'essuyage d'un commodo par un câble de liaison.

D'autres caractéristiques et avantages de la présente invention seront mieux compris à l'aide de la description et des dessins annexés qui sont :
- la figure 1 : un schéma du rotor monté sur un socle d'une machine selon l'invention ;
- la figure 2 : une vue en coupe de l'accrochage de la roue liée au collecteur ;
- la figure 3 : une vue générale du rotor avec la roue liée au collecteur ;
- la figure 4 : un détail de la fixation de l'organe de lecture dans une machine de l'invention ;
- la figure 5 : un détail d'un composant de la machine de la figure 4, permettant de réaliser une machine intégrale selon l'invention ;
- la figure 6 : la vue de dessus d'un composant de la machine de la figure 5 ;
- la figure 7 : une vue de montage en perspective d'un mode de réalisation d'un organe de lecture selon l'invention sur un composant de la machine de la figure 6 ;
- la figure 8 : un schéma de principe d'un système d'essuyage utilisant la machine de l'invention.

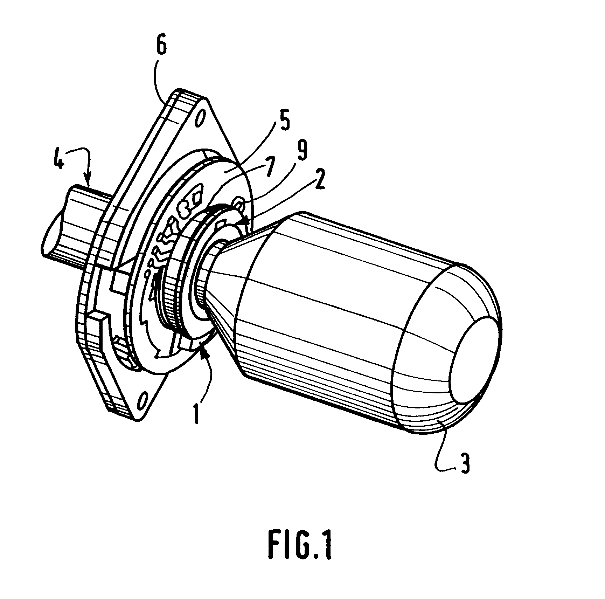

A la figure 1, on a représenté un schéma en perspective d'un rotor équipé d'une roue selon l'invention. Le rotor comporte un bobinage d'induit 3 et un collecteur 7 montés sur un arbre de rotation 4.

Le collecteur 7 passe à travers un trou percé sur un circuit imprimé 5 qui supporte le circuit électrique de service qui sera décrit plus loin. Le circuit imprimé 5 est monté sur des pattes de support (non représentées) montées sur la face intérieure d'un socle 6 ou pièce intermédiaire qui sert à fermer la carcasse (141 à la figure 10) de la machine, et à réaliser sa fixation à un support ou à un autre organe comme un réducteur à engrenages.

A une extrémité du collecteur 7, est montée une roue 2 sur laquelle est portée une indication 9 de position angulaire. Cette indication peut être obtenue, notamment par inscription d'une marque lisible optiquement ou par enregistrement d'une information magnétique. Dans un mode de réalisation, cette indication est constituée par une indication ou marque unique 9. Sur le circuit imprimé 5 est monté un organe de lecture 1 de l'indication 9 inscrite ou enregistrée sur la roue 2. La nature de l'organe de lecture 1 dépend de la nature de l'indication (magnétique, optique, ou autre).

Dans un exemple de réalisation préféré, l'indication est de nature magnétique. L'organe de lecture est alors constitué par un capteur à effet Hall dont la tension de sortie est modulée en fonction des variations du flux engendré par l'indication magnétique. Ainsi, on peut obtenir un signal de lecture en sortie de l'organe de lecture 1 qui soit à une première valeur (maximale par exemple) quand l'indication 9 est la plus proche de l'organe de lecture et à une seconde valeur (par exemple minimale) quand l'indication est à une distance diamétralement opposée par exemple.

Dans un mode de réalisation, la roue 2 est une roue multipolaire. La roue multipolaire 2 est constituée par une succession de pôles alternativement N et S, disposés à la périphérie de la roue. De ce fait, un signal de lecture en sortie de l'organe de lecture présente une variation dépendant du nombre de pôles, nombre qui permet de définir la précision de la détection de la position angulaire instantanée du rotor.

Dans un mode de réalisation, la roue multipolaire 2 est réalisée en un anneau d'un matériau magnétique anisotrope qui est magnétisé par une machine de magnétisation qui lui imprime une succession de polarités N et S alternées sur tout son pourtour. Dans un autre mode de réalisation, la roue multipolaire comporte un corps cylindrique en matériau amagnétique à la surface extérieure duquel est pratiquée une pluralité de logements qui reçoivent des barreaux d'un matériau magnétique convenablement polarisés.

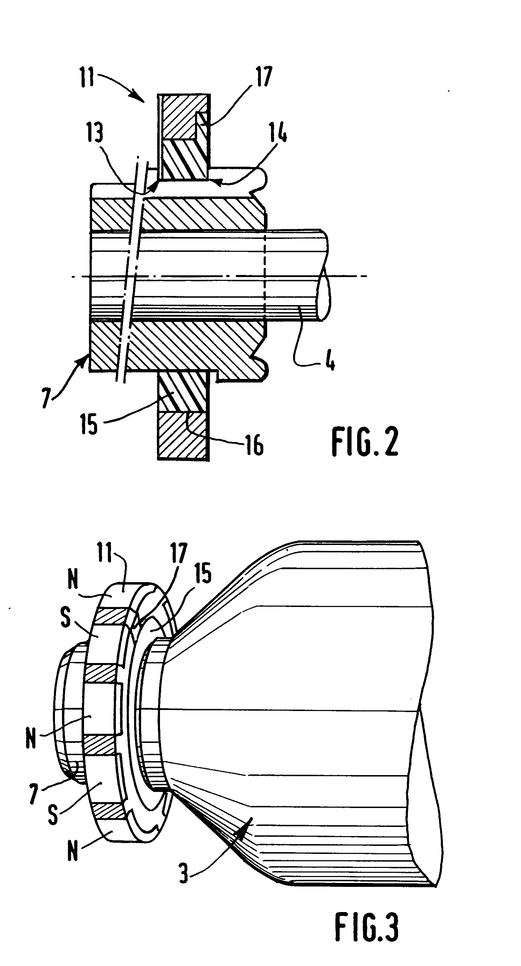

A la figure 2, on a représenté un mode de réalisation de la roue multipolaire 2 ou toute autre roue portant une indication convenable. La roue 11 est portée sur la périphérie du collecteur 12. Des encoches disposées à des intervalles angulaires déterminés sur le collecteur 7, au niveau de moyens de fixation 13,14, de la roue sur le cylindre constitué par le collecteur 7, lesdits moyens étant connus en soi, reçoivent un élément de fixation de la roue 11. Dans un mode de réalisation, un tel élément de fixation est réalisé par une mortaise pratiquée sur une entretoise 15 dont la périphérie 16 porte des languettes 17 qui permettent d'immobiliser la roue 11 en rotation par rapport à l'entretoise 15.

A la figure 3, on a représenté une vue partielle en perspective du mode de réalisation de la figure 2. Les mêmes références sont appliquées aux mêmes éléments qui ne sont pas plus décrits. On y remarque la constitution en anneau cylindrique sur lequel une succession de pôles magnétiques N et S sont inscrits ou insérés.

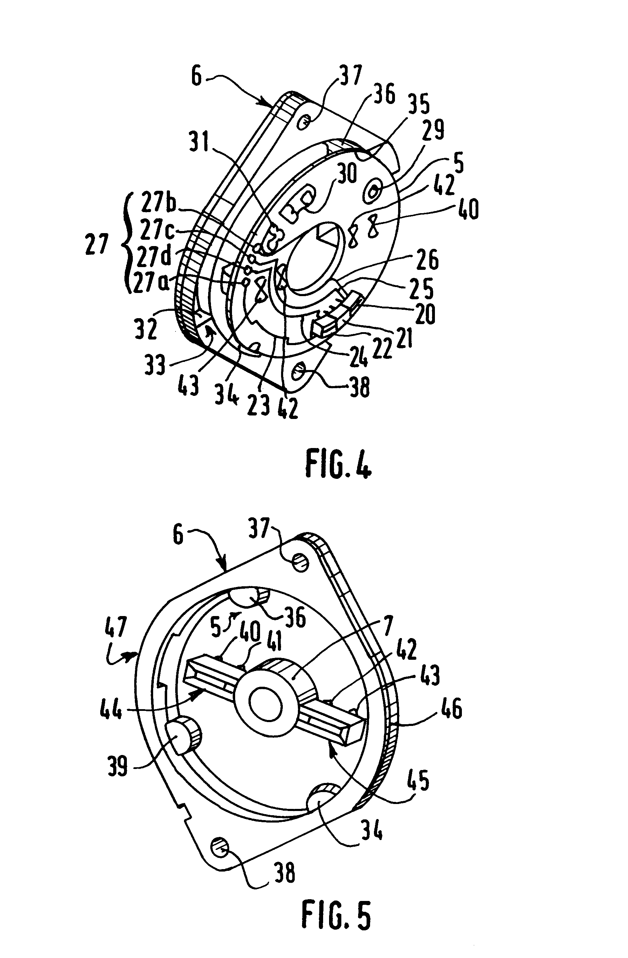

A la figure 4, on a représenté une vue de la pièce intermédiaire 6 équipée. Le circuit imprimé 5 porte dans la partie inférieure au dessin, deux capteurs à effet Hall 20,22, répartis par exemple à un intervalle angulaire de 10° l'un de l'autre. Les deux capteurs 20 et 22 sont insérés dans des logements d'un support 21 des capteurs qui permet leur fixation mécanique et leur orientation par rapport à l'organe tournant qui porte la marque magnétique précitée. De tels capteurs à effet Hall sont constitués par un boîtier semi-conducteur dont une face doit être disposée parallèlement à la variation de flux à détecter (face capteur à effet Hall). Chaque capteur comporte trois pattes d'accès électriques, de polarisation positive et de polarisation négative (masse) et de détection, respectivement.

La patte de polarisation positive de chaque capteur 20,22 est connectée à une piste 23 sur le circuit imprimé 5. Cette piste 23 débouche sur une zone conductrice 27a du circuit imprimé 5, sur laquelle est soudée une traverse non représentée. La traverse est constituée par un corps conducteur allongée comme une patte. Elle constitue un élément sur lequel on vient souder lors du montage du moteur, un fil correspondant d'un câble électrique de liaison de la machine.

De même, la patte de polarisation négative de chaque capteur est connectée à une piste 26 sur le circuit imprimé 5. Cette piste 26 débouche sur une zone conductrice 27b du circuit imprimé 5, sur laquelle est soudée une traverse non représentée. La traverse est constituée par un corps conducteur allongée comme une patte. Elle constitue un élément sur lequel on vient souder lors du montage du moteur, un fil correspondant d'un câble électrique de liaison de la machine.

La patte d'accès électrique de détection de chacun des deux capteurs à effet Hall 20,22 est reliée respectivement à une piste conductrice 24 ou 25 du circuit imprimé. Dans un mode de réalisation, ces deux pistes sont connectées respectivement à des zones conductrices 27c et 27d du circuit imprimé sur lesquelles sont disposées des traverses connectées à des fils corrrespondants du câble de liaison du moteur. De ce fait, la machine de l'invention peut être contrôlée et pilotée depuis l'extérieur, grâce aux signaux de détection transmis par les deux capteurs à effet Hall.

L'ensemble constitué des zones 27a, 27b, 27c et 27d et des traverses constitue une partie d'un bornier 27, qui constitue dans un mode de réalisation la première partie (par exemple, la partie mâle) d'un connecteur dont la seconde partie est portée par l'extrémité du câble électrique de liaison de la machine.

Dans un autre mode de réalisation, le circuit imprimé porte des composants (non représentés au dessin) qui permettent de traiter, sur le circuit électrique de service 5 lui même, les signaux de sortie des capteurs 20, 21, 22. Dans un mode de réalisation, le circuit de service 5 exécute localement l'interface Asservissement électronique (traitement) et machine.

L'alimentation électrique de la machine se fait au moyen des charbons et du câble de liaison qui comporte aussi des fils de connexion aux bobinages de la machine, non représentés, et qui parviennent respectivement sur les zones conductrices 30 et 31 depuis lesquelles sont soudés les fils d'extrémité (non représentés) des bobinages du stator (si le stator est bobiné) et/ou les fils de liaison aux charbons sur le collecteur de la machine (alimentation de la machine).

La pièce intermédiaire 6 comporte des oreilles sur lesquelles sont percés des trous 37 et 38 de fixation à un plat de la carcasse (non représentée) de la machine. Le circuit électrique de service 5 est monté à l'intérieur de la pièce intermédiaire 6 dans un creux constitué par un rebord périphérique 33. Ce creux est tourné vers l'intérieur de la machine quand la pièce intermédiaire est montée sur la carcasse. La pièce intermédiaire 6 porte des jambes ou cales de fixation 34 et 36 du circuit imprimé sur lequel est réalisé le circuit électrique de service 5 (voir nouveau plan).

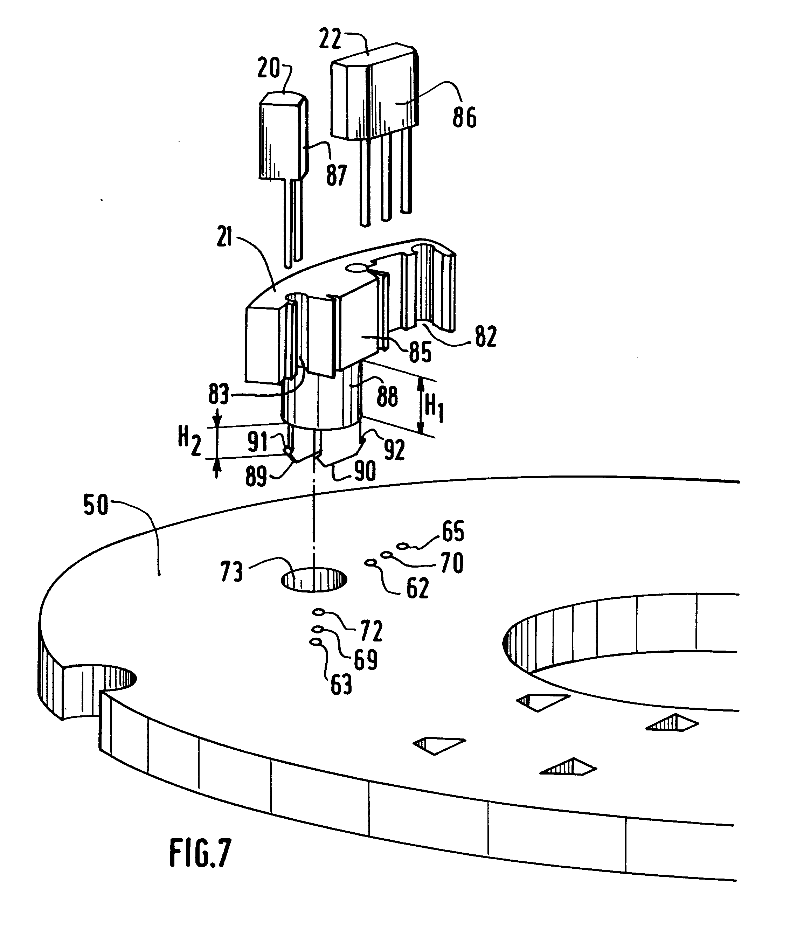

A la figure 5, des pattes de fixation 40 à 43 des étuis porte-charbons 44 et 45 sont insérées dans des trous du circuit imprimé 5 et sont visibles sur un coté à la figure 4 et visibles, du côté des étuis 44 et 45 à la figure 5 (voir plus loin figure 7).

A la figure 5, dans laquelle les mêmes éléments représentés que ceux des figures précédentes portent les mêmes numéros de référence, le collecteur 7 traverse un perçage dans le circuit imprimé 5 et un perçage dans le fond de la pièce intermédiaire. La pièce intermédiaire 6 est représentée installée sur la carcasse, celle-ci n'étant pas représentée.

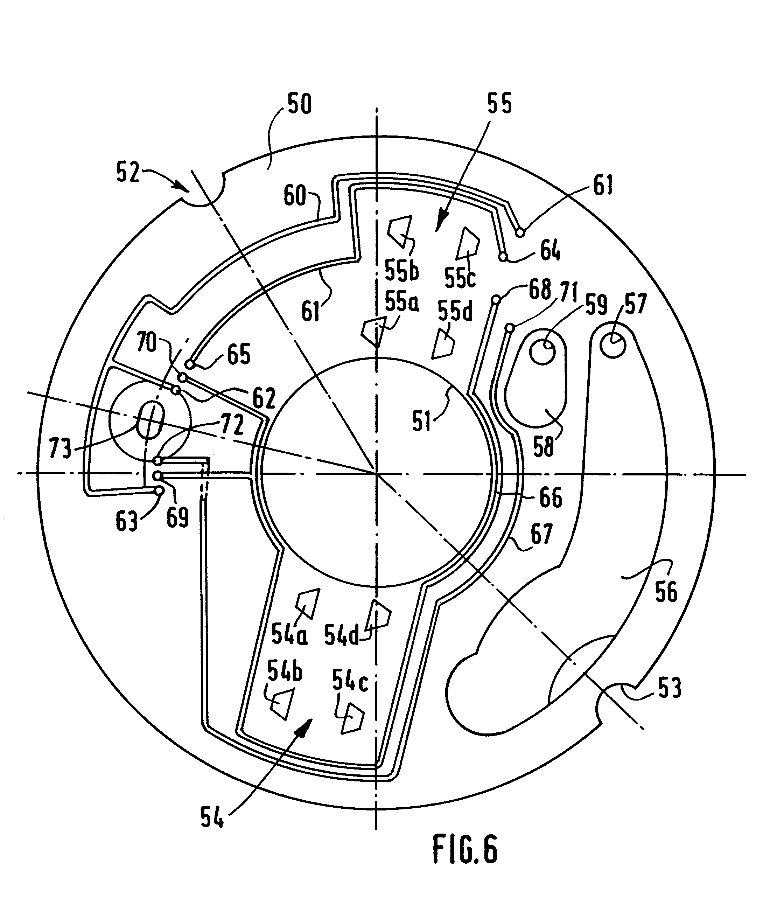

A la figure 6, on a représenté un mode de réalisation du circuit imprimé nu destiné à équiper la pièce intermédiaire 6 de la figure 3. Le circuit imprimé comporte un substrat isolant 50 de forme circulaire percé d'un trou central 51 destiné à laisser passer l'arbre et le collecteur du rotor. La périphérie extérieure du substrat 50 comporte deux encoches 52 et 53 de guidage de la plaquette porte-charbons sur la pièce intermédiaire. Ces encoches sont réalisées par poinçonnage circulaire avec des angles non symétriques de façon à réaliser un détrompage lors du montage du circuit imprimé dans le moteur.

D'autre part, le support 50 a été percé de deux zones 54 et 55 dans lesquelles on a réalisé des trous de fixation de forme trapézoïdale 54a à 54d et 55a à 55d, destinès à recevoir des pattes de fixation de chacun des deux porte-charbons sur la face non représentée aux dessins.

Le substrat 50 porte une première zone conductrice 56 destinée à l'alimentation du moteur. Cette zone conductrice 56 est percée d'un trou 57 destiné au passage d'une traverse de connexion. D'autre part, le substrat porte aussi une seconde zone conductrice 58 destinée à recevoir une connexion de masse électrique de puissance. Cette zone conductrice 58 est percée d'un trou 59 destiné au passage d'une traverse de connexion. Les zones conductrices 56 et 58 correspondent aux zones 30 et 31 de la figure 4 et constituent des moyens de connexion à l'alimentation de la machine.

Le substrat 50 porte ensuite des pistes 60 et 61 respectivement attribuées à la masse commune des capteurs à effet Hall et à la sortie d'information d'un premier capteur à effet Hall. La piste 60 relie une zone de connexion 61 d'extrémité de liaison, à deux zones respectivement 62 et 63 pour mettre à la masse respectivement le premier et le second capteur à effet Hall (non représentés). La piste conductrice 61 est reliée à une connexion 64 et à une connexion 65 sur laquelle la patte de sortie d'information du premier capteur à effet Hall est soudée.

Le substrat 50 porte aussi des pistes conductrices respectivement 66 et 67, d'alimentation des capteurs à effet Hall à un potentiel positif d'une part, et à une sortie d'information de capteur à effet Hall d'autre part. La piste 66 relie respectivement une connexion 68 à deux connexions respectivement 69 et 70 sur lesquelles sont fixées les pattes d'alimentation positive des deux capteurs à effet Hall. La piste 67 relie respectivement une zone de connexion 71 à une connexion 72 destinée à recevoir la patte correspondante du second capteur à effet Hall. L'ensemble des zones de connexion 61,64,69,70 correspond au bornier 27 décrit à la figure 4.

Le substrat isolant comporte entre les deux zones de connexion des deux capteurs à effet Hall, 65,70,62 d'une part, et 72,69,63 d'autre part, un trou de fixation 73 de forme oblongue destiné au passage d'une patte de fixation clipsable du support des deux capteurs à effet Hall.

A la figure 7, on a représenté un plan de montage des capteurs à effet Hall sur le circuit imprimé. Les deux capteurs à effet Hall 20 et 22 sont respectivement constitués par des boîtiers parallélépipèdiques, dont la face inférieure est traversée par trois pattes de connexion. Ces pattes sont destinées à pénétrer dans les trous 65,70,62 d'une part, et 72,69 et 63 déjà décrits à la figure 6. Avant cette introduction, les deux capteurs 20,22 sont introduits par glissement dans deux logements respectivement 82 et 83 d'un support 21. Le support 21 comporte une partie centrale 85 qui est destinée à fixer la distance entre les deux capteurs 20,22 d'une part et qui présente une courbure permettant d'orienter convenablement la face de détection respectivement 86 et 87 des capteurs 20 et 22 d'autre part.

D'autre part, le support 21 présente à sa partie inférieure une colonne 88 d'une hauteur H1 déterminée en fonction de la position finale d'implantation de la roue 2 ou 11 et du capteur 20-22. La colonne 88 présente une extrémité libre inférieure de hauteur H2 correspondant à l'épaisseur du circuit imprimé 5 et porte deux ergots 89 et 90 souples présentant des épaulements 91 et 92. Le pied 89-92 est destiné à pénétrer dans le trou 73 du substrat 50 déjà décrit à la figure 6. Lors de l'introduction les deux ergots 89,90 se raccrochent et sont libérés quand les épaulements 91,92 ressortent par la face libre du substrat 50.

Du fait de la forme oblongue du trou 73 et du pied 89-92, le support est fixé au point de vue de son orientation une fois installé dans le support. De plus, il y a, lors du montage, un guidage naturel des pattes précitées des capteurs à effet Hall à travers les trous de contact correspondant du substrat 50.

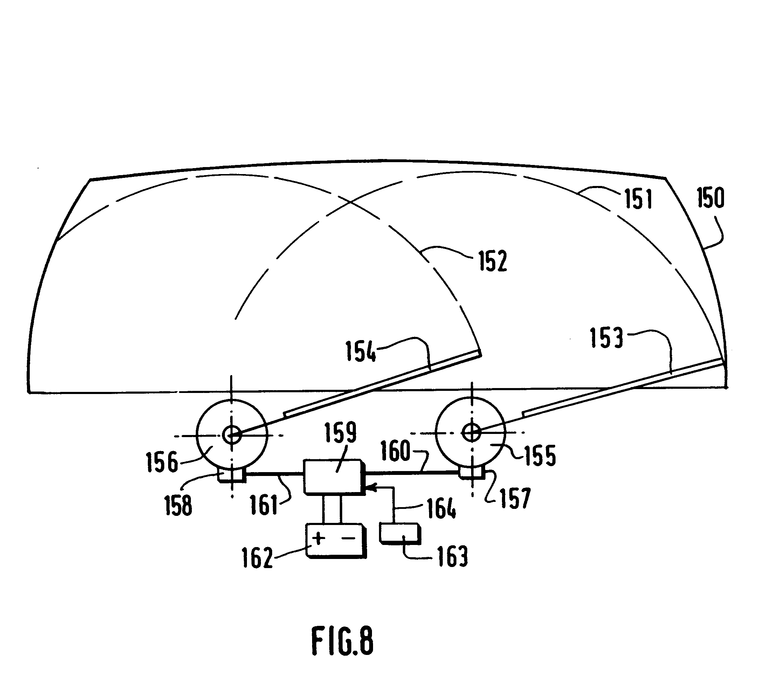

A la figure 8, on a représenté un mode de réalisation d'un système d'essuyage appliqué à l'automobile. Le pare-brise 150 comporte deux zones de balayage distinctes 151 et 152. Chaque zone est balayée par un balai 153 ou 154, respectivement.

Plus de deux zones peuvent être prévues. C'est le cas de l'essuyage de certaines surfaces complexes comme les pare-brise de véhicules de fort volume et qui comportent plus de deux zones d'essuyage.

Comme le balayage des zones 151 et 152 doit être synchronisé, chaque balai 153 ou 154 est relié par une extrémité à l'arbre de rotation d'un moteur 155,156 respectivement, autosynchronisé selon l'invention. A cet effet, chacun des moteurs 155,156, est muni d'un connecteur 157 et 158 respectivement, connecté à un circuit de pilotage 159 par des câbles de liaison respectivement 160 et 161. Le circuit de pilotage 159 reçoit de l'énergie électrique de la batterie 162. D'autre part, il reçoit les commandes d'essuyage du commodo 163 par un câble de liaison 164.

Le circuit de contrôle reçoit les signaux de détection de la paire de capteurs à effet Hall installée sur chacun des moteurs 155 et 156, par l'intermédiaire des câbles de liaison 160 et 161. En fonction des signaux de détection de la position angulaire des deux rotors, le circuit de contrôle 159 dérive une information de position et une information de vitesse pour chacun des deux moteurs 155 et 156. Ces deux paires d'information permettent de synchroniser parfaitement les balayages des balais d'essuyage 153 et 154. En effet, le circuit de contrôle 159 régule la tension et le courant électrique qu'il fournit à chacun des moteurs 155 et 156 par l'intermédiaire des câbles de liaison respectivement 160 et 161.

Le circuit de contrôle est constitué autour d'un microcontrôleur dont une mémoire contient le programme de synchronisation du balayage des deux zones 151 et 152 en fonction de la paire d'informations de position et de vitesse précitée. Quand les informations de position et/ou de vitesse des deux moteurs ne correspondent pas à des valeurs enregistrées dans des tables de correspondance des phases de balayage 151 et 152, le microcontrôleur exécute une routine de modulation de l'énergie électrique (tension et/ou courant) de l'un ou l'autre des moteurs ou des deux moteurs de façon à conserver une relation de phase prédéterminée.

Dans la présente description, le type de capteur décrit est du genre magnétique à effet Hall. Cependant, d'autres types de capteurs, notamment mettant en oeuvre des effets optiques ou électriques (comme l'induction), sont adaptables directement dans le cadre des revendications annexées.

De même, le système d'essuyage synchronisé peut être adapté à l'entraînement d'autres charges mécaniques que des balais d'essuyage. On citera en particulier le réglage de direction des projecteurs de véhicule. De plus, l'autosynchronisation peut être envisagée sur un seul moteur ou machine électrodynamique. En particulier, c'est le cas quand les mouvements de la charge mécanique doivent être synchronisés su un phénomène extérieur dont les variations sont par exemple périodiques et sont mesurées par un capteur spécifique qui prend la place du capteur du second moyen d'autosynchronisation.

De même, dans un mode de réalisation le circuit imprimé 5 décrit aux figures 1 à 7 peut porter un ou plusieurs circuits intégrés comme un microcontrôleur programmable et/ou une mémoire vive, dans lequel est implanté un programme de gestion de l'autosynchronisation du système complet. Ce programme peut être complet. Auquel cas, l'un des moteurs se voit confier une fonction de gestion générale du système. Ce programme peut être spécialisé à la gestion des mouvements de la seule charge mécanique entraînée par le moteur sur le circuit imprimé duquel il est implanté. Auquel cas, le câble de liaison électrique du moteur peut comporter aussi au moins un fil de transmission qui sert de moyen de transmission porteur d'un signal de communication entre le microcontrôleur et le programme central implanté dans le circuit de contrôle précité.

## Revendications

1. Machine électrodynamique à collecteur tournant (7) avec un rotor (3) dans un stator, comme un moteur à courant continu, dotée d'un moyen d'autosynchronisation, caractérisée en ce que le moyen d'autosynchronisation comporte :
- une roue (2 ; 11), liée au collecteur et dont au moins une partie porte une indication (9) de position angulaire enregistrée ;
- au moins un organe de lecture de ladite indication (9) de position, l'organe de lecture étant lié au stator de la machine.

2. Machine selon la revendication 1, caractérisée en ce que la partie portant une indication de position angulaire enregistrée est de type magnétique.

3. Machine selon la revendication 2, caractérisée en ce que l'organe de lecture (1) est constitué par au moins un capteur à effet Hall (1 ; 20-22).

4. Machine selon la revendication 1, du type comportant une carcasse (141) avec un socle ou pièce intermédiaire (6) et dotée d'un circuit électrique de service (5), caractérisée en ce que l'organe de lecture (1) est monté sur le circuit électrique de service (5) de la machine, de façon à former un ensemble intégral avec le socle de la carcasse.

5. Machine selon la revendication 1, caractérisée en ce que la partie portant une indication de position angulaire enregistrée est de type optique, et en ce que l'organe de lecture (1) est constitué par au moins un capteur optique.

6. Machine selon l'une des revendications 1 à 4, caractérisée en ce que la roue (2) qu'elle comporte est de type multipolaire, constituée par une succession de pôles alternativement N et S, disposés à la périphérie de la roue, de façon à produire un signal de lecture en sortie de l'organe de lecture (1 ; 20-22) représentatif de la position angulaire instantanée du rotor.

7. Machine selon l'une des revendications précédentes, caractérisée en ce que l'organe de lecture (1) comporte au moins deux capteurs à effet Hall (20, 22), à une distance angulaire prédéterminée l'un de l'autre, qui sont insérés dans des logements d'un support (21) des capteurs qui permet leur fixation mécanique, qui détermine leur orientation par rapport à la roue (2 ; 11) et qui détermine la distance entre l'organe de lecture (1) et la roue (2).

8. Machine selon la revendication 7, caractérisée en ce que, chaque capteur à effet Hall (20, 22) comporte trois pattes d'accès électriques, de polarisation positive et de polarisation négative (ou masse) et de détection, connectées respectivement à une première piste (23) de polarisation positive, à une seconde piste (26) de polarisation négative (ou masse) et à une piste de signal de détection (24 ou 25) qui sont reliées respectivement à des zones de connexion conductrices (27a,27b,27c,27d) constituant à l'aide de traverses conductrices notamment un bornier (27), qui est relié à des fils d'un câble de liaison destiné à relier la machine à un circuit extérieur de pilotage.

9. Machine selon la revendication 8, caractérisée en ce qu'un circuit spécialisé de traitement du signal est porté par le circuit imprimé (5), circuit de traitement connecté aux zones de connexion (27c,27d), qui permet de traiter les signaux de détection des capteurs (20, 22).

10. Machine selon l'une des revendications 7 à 9, caractérisée en ce que, afin de réaliser une haute intégration des fonctions de la machine, le circuit imprimé porte des moyens de connexion à l'alimentation électrique de la machine, moyens constitués d'une première zone conductrice (30 ; 56) et d'une seconde zone conductrice (31 ; 58) depuis lesquelles sont soudés les fils d'alimentation électrique de la machine (charbons et/ou fils d'extrémité des bobinages du stator).

11. Système d'essuyage synchronisé appliqué à l'automobile, caractérisé en ce qu'il comporte au moins un moteur selon l'une des revendications précédentes, moteur destiné à entraîner un balai d'essuyage d'une vitre en synchronisme avec une loi d'essuyage prédéterminée.

12. Système d'essuyage synchronisé selon la revendication précédente, caractérisé en ce qu'il comporte au moins deux zones de balayage synchronisé (151, 152) balayées par des balais (153, 154), dont l'extrémité est entraînée par un moteur (155 ou 156) synchronisé par un circuit de pilotage (159), chacun des moteurs (155, 156) étant muni d'un connecteur (157, 158), connecté à un circuit de pilotage (159) par des câbles de liaison (160, 161), le circuit de pilotage (159) recevant de l'énergie électrique d'une batterie (162) et recevant les commandes d'essuyage d'un commodo (163) par un câble de liaison (164).

13. Système selon la revendication 12, caractérisé en ce que le circuit de contrôle reçoit les signaux de détection de la paire de capteurs à effet Hall installée sur chacun des moteurs (155, 156), par l'intermédiaire des câbles de liaison (160, 161), en fonction des signaux de détection de la position angulaire des deux rotors, le circuit de contrôle (159) dérive une information de position et/ ou une information de vitesse pour chacun des deux moteurs (155, 156), ces deux paires d'information permettant de synchroniser parfaitement les balayages des balais d'essuyage (153, 154).

14. Système d'essuyage selon la revendication 13, caractérisé en ce que le circuit de contrôle (159) régule la tension et le courant électrique qu'il fournit à chacun des moteurs (155, 156) par l'intermédiaire des câbles de liaison respectivement (160, 161) en fonction d'une loi de phases des deux balayages préalablement enregistrée dans un microcontrôleur.

15. Système selon l'une des revendications 11 à 14, caractérisé en ce que le circuit électrique de service (5) d'au moins l'un des moteurs (155,156) comporte un microcontrôleur dans lequel est inscrit et s'exécute un programme général de gestion de l'autosynchronisation du système ou un microcontrôleur connecté à au moins un moyen comme un fil de transmission porteur d'un signal de communication entre le microcontrôleur et le circuit de contrôle (159), microcontrôleur dans lequel est inscrit et s'exécute un programme de gestion de l'autosynchronisation spécialisé à la gestion des mouvements de la seule charge mécanique entraînée par ledit moteur.
